# EUROPEAN PATENT SPECIFICATION

(11) **EP 4 357 883 B1**
(45) Date of publication and mention of the grant of the patent: **25.03.2026**
(21) Application number: 22874695.4
(22) Date of filing: 19.09.2022
(51) Int. Cl.: G06F 3/00, G06F 16/215, G06F 16/23, G06F 21/64, H04L 9/32, H04L 9/00

(54) **DATA VERIFICATION METHOD AND APPARATUS, DEVICE AND STORAGE MEDIUM**
DATENVERIFIZIERUNGSVERFAHREN UND -VORRICHTUNG, VORRICHTUNG UND SPEICHERMEDIUM
PROCÉDÉ ET APPAREIL DE VÉRIFICATION DE DONNÉES, DISPOSITIF, ET SUPPORT DE STOCKAGE

(30) Priority: 29.09.2021 CN 202111154040
(43) Date of publication of application: 24.04.2024
(73) Proprietor: Huawei Technologies Co., Ltd., Shenzhen, Guangdong 518129 (CN)
(72) Inventor: ZHU, Jinwei, Shenzhen, Guangdong 518129 (CN); HE, Rui, Shenzhen, Guangdong 518129 (CN); LI, Bingchen, Shenzhen, Guangdong 518129 (CN)
(74) Representative: Maiwald GmbH
(86) International application number: PCT/CN2022/119696
(87) International publication number: WO 2023/051308

(56) References cited:
- CN-A- 109 635 300
- CN-A- 111 427 571
- CN-A- 111 930 850
- CN-A- 111 930 850
- CN-A- 112 788 017
- CN-A- 113 312 675
- US-A- 5 974 574
- US-A1- 2005 138 223
- US-A1- 2018 205 552

## Description

### TECHNICAL FIELD

This application relates to the field of data storage technologies, and in particular, to a data verification method and apparatus, a device, and a storage medium.

### BACKGROUND

US5974574A describes a method of checking a large and/or replicated databases includes forming a position sensitive checksum for each entry of the database to be used in the check. It is described that the checksums are then exclusive Ored with one another to form a first database checksum. It is described that periodically, the checksums are again created from each of the entries of the check and a second database checksum formed and compared to the first for a match that indicate checked entries of the database have not changed.

As a big data era has come, storage of massive volumes of data is involved in various fields. To ensure data security, stored data needs to be verified. At present, a data storage system usually stores some important data by using a blockchain, so that a data modification operation cannot be easily tampered with or denied. As a blockchain structure is a chain structure, and a next block is definitely generated based on a previous block, data verification is closely related to a data operation sequence. This instead poses a limitation on data processing that is supported by the data storage system. As a result, a database cannot support a deletion operation and an update operation, but can support only an insertion operation. In addition, there is a low degree of parallel data processing, resulting in low data processing efficiency. Therefore, a data verification method that can improve data processing efficiency is urgently needed.

### SUMMARY

This application provides a data verification method and apparatus, a device, and a storage medium, to improve data processing efficiency. The technical solutions are described below.

The appended independent claims define the invention and its scope of protection. The appended dependent claims define emodiments of the invention. The following aspects and implementations of the summary provide example of how technical subject matters can be combined.

According to a first aspect, a data verification method is provided. The method includes:
in response to a verification request, applying a target algorithm based on a plurality of pieces of data corresponding to the verification request, to determine first verification information, where the first verification information indicates global verification information of the plurality of pieces of data, and an output result of the target algorithm is not affected by a sequence of computing input data;
determining a target verification set based on a first verification set and a second verification set, where the first verification set includes verification information of data corresponding to a historical insertion operation, and the second verification set includes verification information of data corresponding to a historical deletion operation;
applying the target algorithm based on the target verification set, to determine second verification information, where the second verification information indicates global verification information of the target verification set; and
outputting a verification result based on the first verification information and the second verification information.

In the technical solutions provided in embodiments of this application, during data verification, the first verification information is obtained according to the target algorithm based on the verification information of the data, the second verification information is obtained according to the target algorithm based on the target verification set determined based on the first verification set and the second verification set, and finally the first verification information is compared with the second verification information, to obtain the verification result. As the output result of the target algorithm is not affected by the sequence of computing the input data, a type and a sequence of a data operation do not affect data verification, so that a plurality of types of data operations can be supported, and a degree of parallel data processing can be enhanced while security and accuracy of data verification are ensured, to improve data processing efficiency.

In some embodiments, the applying a target algorithm based on a plurality of pieces of data corresponding to the verification request, to determine first verification information includes:
generating temporary verification information of each piece of the data based on the plurality of pieces of data; and
when temporary verification information of the plurality of pieces of data is all consistent with verification information of the plurality of pieces of data, applying the target algorithm based on the verification information of the plurality of pieces of data, to generate the first verification information, where the output result of the target algorithm is not affected by the sequence of computing the input data.

Each piece of the data is verified separately before overall verification is performed, so that whether a piece of the data has changed can be determined, to perform preliminary verification. If the preliminary verification fails, a subsequent verification procedure may not be performed. In this way, not only a purpose of verification is achieved, and complexity of data processing can be reduced.

In some embodiments, the target algorithm includes:
adding a plurality of pieces of verification information to obtain a sum of a length n, and performing a modulo operation on 2n based on the sum;
performing an XOR operation on each pair of pieces of verification information in the plurality of pieces of verification information;
multiplying the plurality of pieces of verification information to obtain a product of a length n, and performing a modulo operation on 2n based on the product;
sorting and concatenating the plurality of pieces of verification information into concatenated verification information, and hashing the concatenated verification information; or
hashing the plurality of pieces of data in a sequence of storing the plurality of pieces of verification information in a self-balancing binary search tree, where
the plurality of pieces of verification information is the verification information of the plurality of pieces of data corresponding to the verification request, or a plurality of pieces of verification information in the target verification set, and n is a positive integer.

The foregoing algorithm can ensure that the output result is not affected by the sequence of computing the input data, and provides a plurality of possible manners for implementing embodiments of this application.

In some embodiments, the method further includes: When temporary verification information of any piece of the data is inconsistent with verification information of the data, the verification result is that verification fails.

In some embodiments, the determining a target verification set based on a first verification set and a second verification set includes: determining that a difference set between the first verification set and the second verification set is the target verification set. A difference between the sets is calculated to obtain a change of the verification information, to reflect which data is to be left after a series of data operations, thereby providing a basis for data verification.

In some embodiments, the outputting a verification result based on the first verification information and the second verification information includes: When the first verification information is consistent with the second verification information, the verification result is that verification successes; or when the first verification information is inconsistent with the second verification information, the verification result is that verification fails.

In some embodiments, the method further includes: in response to a data insertion request, obtaining verification information of first data based on the first data in the data insertion request; storing the verification information of the first data in the first verification set, where the first verification set is used to store verification information of data corresponding to a request type that is a data insertion request; and storing the first data and the verification information of the first data.

According to the foregoing technical solution, verification information of corresponding data can be obtained when a data insertion operation is performed. The obtained verification information and the data are stored as a whole, and the verification information is added to the data to prevent tampering. Further, the addition of the verification information through the data insertion operation is documented by using a verification set. In this way, an accurate verification basis for subsequent data verification can be provided, to implement data tracing.

In some embodiments, the method further includes: in response to a data deletion request, obtaining verification information of second data based on the second data in the data deletion request; storing the verification information of the second data in the second verification set, where the second verification set is used to store verification information of data corresponding to a request type that is a data deletion request; and deleting the second data and the verification information of the second data.

According to the foregoing technical solution, when performing a data deletion operation, a node can obtain verification information of corresponding data, and document, by storing the verification information in a verification set, reduction of verification information through the data deletion operation. In this way, an accurate verification basis for subsequent data verification can be provided, to implement data tracing.

In some embodiments, the method further includes: obtaining a data update request; obtaining third verification information of third data based on the third data in the data update request; storing the third verification information of the third data in the second verification set, where the second verification set is used to store verification information of data corresponding to a request type that is a data deletion request; deleting the third data, where the third data includes the third verification information; obtaining fourth verification information of fourth data based on the fourth data in the data update request; storing the fourth verification information of the fourth data in the first verification set, where the first verification set is used to store verification information of data corresponding to a request type that is a data insertion request; and storing the fourth data and the fourth verification information.

According to the foregoing technical solution, when a data update operation is performed, verification information, of data, that needs to be deleted and that needs to be inserted can be obtained at the same time, the obtained verification information is separately stored in corresponding verification sets, and a change of the verification information because of a data insertion operation and a data deletion operation is documented at the same time. In this way, with ensured data security, an accurate verification basis for subsequent data verification can be provided by using a verification set, to implement data tracing.

According to a second aspect, a data verification apparatus is provided. The apparatus includes a plurality of functional modules, configured to perform corresponding steps in the data verification method according to the first aspect.

In the technical solutions provided in embodiments of this application, during data verification, the first verification information is obtained according to the target algorithm based on the verification information of the data, the second verification information is obtained according to the target algorithm based on the target verification set determined based on the first verification set and the second verification set, and finally the first verification information is compared with the second verification information, to obtain the verification result. As the output result of the target algorithm is not affected by the sequence of computing the input data, a type and a sequence of a data operation do not affect data verification, so that a plurality of types of data operations can be supported, and a degree of parallel data processing can be enhanced while security and accuracy of data verification are ensured, to improve data processing efficiency.

According to a third aspect, a computing device is provided. The computing device includes a processor and a memory. The memory is configured to store at least one piece of program code, and the at least one piece of program code is loaded by the processor to perform the foregoing data verification method.

According to a fourth aspect, a computer-readable storage medium is provided. The computer-readable storage medium is configured to store at least one piece of program code, and the at least one piece of program code is used to perform the foregoing data verification method.

According to a fifth aspect, a computer program product is provided. When the computer program product runs on a computing device, the computing device is enabled to perform the foregoing data verification method.

### BRIEF DESCRIPTION OF DRAWINGS

FIG. 1 is a schematic diagram of an architecture of a data storage system according to an embodiment of this application;
FIG. 2 is a schematic diagram of a hardware structure of a computing device according to an embodiment of this application;
FIG. 3 is a schematic diagram of a data verification method according to an embodiment of this application;
FIG. 4 is a schematic flowchart of a data verification method according to an embodiment of this application;
FIG. 5 is a schematic flowchart of a data verification method according to an embodiment of this application;
FIG. 6 is a schematic diagram of a verification set according to an embodiment of this application;
FIG. 7 is a schematic flowchart of a data verification method according to an embodiment of this application;
FIG. 8 is a schematic diagram of temporary verification information according to an embodiment of this application;
FIG. 9 is a schematic diagram of a target verification set according to an embodiment of this application;
FIG. 10 is a schematic diagram of an application scenario of a data verification method according to an embodiment of this application; and
FIG. 11 is a schematic diagram of a structure of a data verification apparatus according to an embodiment of this application.

### DESCRIPTION OF EMBODIMENTS

To make the objectives, technical solutions, and advantages of this application clearer, implementations of this application are further described below in detail with reference to the accompanying drawings.

Before the technical solutions provided in embodiments of this application are described, key terms in this application are first described below.

Hash (hash), is a mathematical computer program. Any set of input information of any length can be converted into a data fingerprint output form of a fixed length through hashing, for example, a combination of letters and digits. The output is a "hash value" or "digest". Hashing information makes it faster to store and search for information because a hash value is usually shorter and therefore easier to be found. In addition, hashing provides information encryption. In principle, results of hashing a specific data file are the same, but in computation, it is not feasible to find two data files that have a same hash value.

Digest (digest) is a fixed-length output value obtained by mapping an input binary bit string of any length by using a calculation function. A key feature of cryptographic digest is that for a specific digest, it is impossible to find another data file to generate a same digest through calculation.

A consensus mechanism is an algorithm for achieving a distributed consensus on a blockchain transaction. A user may select a suitable consensus algorithm based on an actual service scenario. The consensus algorithm includes but is not limited to: a proof of work (proof of work, POW), a proof of stake (proof of stake, POS), a delegated proof of stake (delegated proof of stake, DPOS), a practical byzantine fault tolerance (practical byzantine fault tolerance, PBFT) algorithm, and the like.

An application scenario of technical solutions provided in embodiments of this application is briefly described below.

A data verification method provided in embodiments of this application can be applied to a scenario in which data verification is required, for example, electronic loaning and database maintenance. For example, a scenario to which the data verification method provided in embodiments of this application can be applied includes but is not limited to the following:

### Scenario 1: A scenario of electronic loaning.

When an electronic loaning transaction is performed, to ensure that the loaning transaction is performed safely and efficiently, data verification needs to be performed on data changes because of various transaction requests, to find tampered trade data in time, prevent denial and cheating, and maintain privacy rights and property security of a user.

### Scenario 2: Database maintenance.

For a database that stores a massive amount of data, when storing and processing the data, a database management system needs to verify the data to ensure that the data in the database is not tampered with and provide an efficient data processing environment.

It should be noted that the foregoing scenarios are merely examples for description, and the data verification method provided in embodiments of this application can be used in a plurality of scenarios in which a data change status needs to be monitored. For example, the data verification method may be further used in a scenario of asset tracking. An application scenario of the data verification method is not limited in embodiments of this application.

It should be noted that the data verification method provided in embodiments of this application is used in a relational database. In some embodiments, the data verification method provided in embodiments of this application is used in an advanced database, for example, a graph database, a time series database, a document database, or an artificial intelligence database. This is not limited in embodiments of this application.

In some embodiments, verification information may be used as a feature of a data status, to reflect an overall status of all data in a data storage system. The verification information can be generated when a data storage sequence changes without affecting the overall status. Data verification can be performed only by documenting corresponding status change history. In other words, in a non-database scenario, verification can also be performed by using the data verification method provided in this application. This is not limited in embodiments of this application.

As the application scenario of the technical solutions provided in embodiments of this application is described above, the technical solutions provided in embodiments of this application are described in detail below.

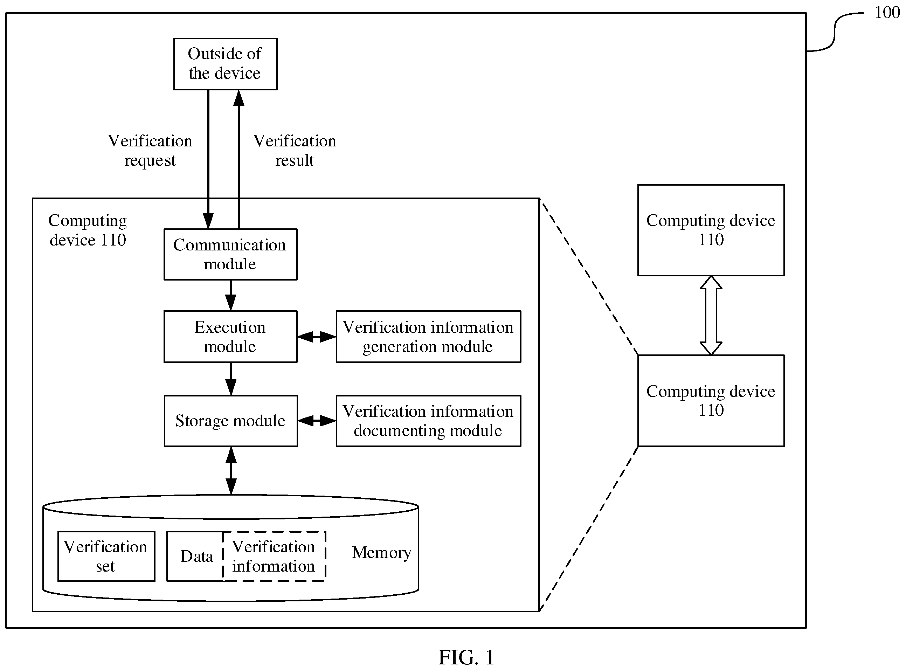

FIG. 1 is a schematic diagram of an architecture of a data storage system according to an embodiment of this application. As shown in FIG. 1, a data storage system 100 includes a plurality of computing devices 110. The computing devices 110 can be used as nodes in the data storage system. In some embodiments, functions of the plurality of nodes in the data storage system are the same. To be specific, one of the nodes can process a data request, and can further perform verification based on the data request. In some other embodiments, the plurality of nodes in the data storage system include a control node and a storage node. To be specific, the control node is configured to process and verify the data request, and the storage node is configured to store data. This is not limited in this embodiment of this application.

The plurality of computing devices 110 are communicatively connected to each other by using a wired network or a wireless network. In some embodiments, the wireless network or the wired network is based on a standard communication technology and/or protocol. The network is usually the Internet, but may alternatively be any network, including but not limited to any combination of a local area network (local area network, LAN), a metropolitan area network (metropolitan area network, MAN), a wide area network (wide area network, WAN), a mobile network, a wired network, a wireless network, a private network, or a virtual private network. In some embodiments, peer-to-peer (peer-to-peer, P2P) communication between the plurality of computing devices 110 is implemented based on a remote procedure call protocol (remote procedure call protocol, RPC). In some embodiments, a technology and/or format including a hypertext markup language (hypertext markup language, HTML), an extensible markup language (extensible markup language, XML), and the like is used to represent data exchanged over a network. In addition, conventional encryption technologies such as secure socket layer (secure socket layer, SSL), transport layer security (transport layer security, TLS), virtual private network (virtual private network, VPN), and internet protocol security (internet protocol security, IPsec) can be used to encrypt all or some links. In other embodiments, a customized and/or dedicated data communication technology may alternatively be used to replace or supplement the foregoing data communication technology.

By software structures, the computing devices each include a storage layer and an execution layer. The storage layer stores data in a form of a data table. A target column is set in the data table. The target column is used to store verification information of the data. When there is data insertion, data deletion, or data update in the data table, corresponding verification information is stored in the target column. In the storage layer, a verification set is further stored, and is used to store corresponding verification information to document a historical change of the data when an operation of changing the data is performed. The execution layer includes a verification interface for a communication function. A terminal may send a verification request through the verification interface, to specify a data table that needs to be verified. The execution layer determines, by comparison based on the verification request of the terminal, whether verification information of specified data is consistent with verification information documented in the verification set, to obtain a verification result, and returns the verification result to a user through the verification interface.

From the perspective of a system architecture, functional modules in the computing device can separately provide services such as communication, verification, execution, and storage. The verification includes verification information generation and verification information documentation. Refer to FIG. 1. The data storage system includes the plurality of computing devices 110. The plurality of computing devices can interact and communicate with each other. The computing devices receive a data change request from outside the devices, and perform a corresponding operation on data according to an instruction in the data change request, including data insertion, data deletion, data update, data query, and the like. When performing an operation on the data, the computing devices generate verification information of new data that needs to be inserted, stores the verification information together with the new data, and documents, in the verification set, the verification information corresponding to the changed data. Based on this, when receiving the verification request from outside the devices, the computing devices can verify the data based on the verification set and the verification information of the data, and return a verification result to outside the device.

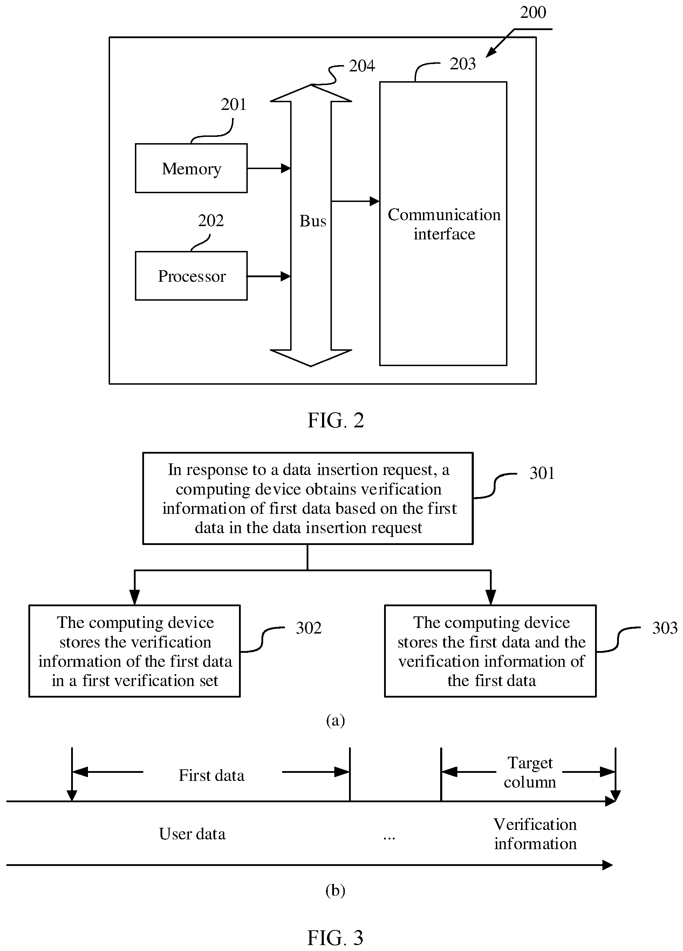

For example, for a structure of each of the computing devices 110 in the foregoing system architecture, refer to FIG. 2. FIG. 2 is a schematic diagram of a hardware structure of the computing device according to an embodiment of this application. As shown in FIG. 2, a computing device 200 includes a memory 201, a processor 202, a communication interface 203, and a bus 204. A communication connection between the memory 201, the processor 202, and the communication interface 203 is implemented by using the bus 204.

The memory 201 may be, but is not limited to, a read-only memory (read-only memory, ROM) or another type of static storage device that can store static information and instructions, a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer. The memory 201 may store at least one piece of program code. When the program code stored in the memory 201 is executed by the processor 202, the processor 202 and the communication interface 203 are configured to perform the data verification method. The memory 201 may further store temporary verification information for data verification, and the like. This is not limited in this embodiment of this application.

The processor 202 may be a network processor (network processor, NP), a central processing unit (central processing unit, CPU), an application-specific integrated circuit (application-specific integrated circuit, ASIC), or an integrated circuit configured to control program execution in this solution of this application. The processor 202 may be a single-core processor (single-CPU), or may be a multi-core processor (multi-CPU). There may be one or more processors 202. The communication interface 203 may use, for example, a transceiver or another transceiver module, to implement communication between the computing device 200 and another device or communication network. For example, a verification request may be obtained through the communication interface 203.

The memory 201 and the processor 202 may be disposed separately, or may be integrated together.

The bus 204 may include a path for transmitting information between various components (for example, the memory 201, the processor 202, and the communication interface 203) of the computing device 200.

Based on the descriptions of the data storage system in which a data verification method provided in an embodiment of this application is used, the data verification method provided in this embodiment of this application is described below with reference to some detailed embodiments.

In the data verification method provided in this embodiment of this application, a computing device performs different operations on data in response to different types of data processing requests, and stores verification information of the data in a corresponding verification set, to document a change of the data. Based on this, the computing device verifies the data based on the verification information of the data and the verification set in response to a verification request.

First, the computing device documents, in the verification set based on a type of a data change operation, verification information corresponding to changed data. In some embodiments, the data change operation is classified into three types: data insertion, data deletion, and data modification. For a data insertion operation, insertion of new data causes an increase of verification information, and the computing device stores verification information corresponding to the new data, and documents, in a corresponding verification set, verification information corresponding to the insertion operation. For a data deletion operation, deletion of stored data causes deletion of corresponding verification information, and the computing device deletes the verification information corresponding to the stored data and documents, in a corresponding verification set, verification information corresponding to the deletion operation. For a data update operation, a data update includes deletion of stored data and storage of new data, and when storing verification information corresponding to the new data, the computing device deletes verification information corresponding to the stored data, and documents, in a corresponding verification set, verification information corresponding to the insertion operation and verification information corresponding to the deletion operation.

A data verification method provided in embodiments of this application is applied to the data storage system 100 shown in FIG. 1. A procedure of the data verification method is described below by using an example in which the computing device 110 in the data storage system 100 is configured to perform the method.

FIG. 3 is a schematic diagram of a data verification method according to an embodiment of this application. FIG. 3 includes a figure (a). The figure (a) in FIG. 3 is a schematic flowchart of the data verification method according to this embodiment of this application.

Refer to the figure (a) in FIG. 3. When a data change request is a data insertion request, a procedure in which a computing device stores data includes the following step 301 to step 303.

301: In response to the data insertion request, the computing device obtains verification information of first data based on the first data in the data insertion request. Then, step 302 and step 303 are performed.

The data insertion request indicates to insert the first data into a first data table. For example, in an electronic financial trade scenario, a terminal executes a trade transaction of a financial product, carries trade data of the trade transaction in the data insertion request, and sends the data insertion request to a data storage system, to request the data storage system to store the trade data in a corresponding data table.

In this embodiment of this application, the first data includes user data. The user data is information related to an attribute of a user and data related to a request initiated by the user. For example, in the electronic financial trade scenario, if the user initiates a financial product purchase trade, the user data includes financial account information (including an account number, an account balance, and the like) of the user, information about a financial product that the user requests to purchase, and the like. In addition, the computing device further obtains system information corresponding to the first data. The system information is related information when the computing device processes the first data, for example, transaction information corresponding to the first data, storage time corresponding to the first data, or file storage offset information of the first data.

The verification information of the first data is digest generated through hashing based on the first data, and the verification information of the first data is used as a data fingerprint of the first data, and can uniquely correspond to the first data. After the verification information of the first data is obtained, if the verification information regenerated based on the first data is inconsistent with the previously generated verification information, it indicates that the first data has changed, for example, has been tampered with. That is, whether the first data has changed after the verification information of the first data is determined can be determined based on the verification information of the first data.

In some embodiments, the verification information is generated by using a one-way hash function. The one-way hash function can map data into binary information of a fixed length, to ensure that extra storage overheads due to the verification information is not affected by a size of the data. In addition, the one-way hash function has three characteristics: (1) An input may be of any length, and an output is of a fixed length; (2) one-way, meaning that it is difficult to deduce the output through values in the function; and (3) sensitive, meaning that for different inputs, there are usually different outputs with no obvious distribution pattern. By using the one-way hash function, each row of data can be mapped to a fixed-length value space, and a value in the value space represents one row of data in a data table.

It should be noted that the verification information may be generated in different manners, including a direct addressing method, a middle square method, a random number method, and the like. An implementation of generating the verification information is not limited in this embodiment of this application.

302: The computing device stores the verification information of the first data in a first verification set, where the first verification set is used to store verification information of data corresponding to a request type that is a data insertion request.

The first verification set is used to document a data insertion operation that occurs in the data storage system. When data needs to be inserted into a data table, the computing device synchronously stores, in the first verification set, verification information corresponding to the data, to document a change of the data by storing the verification information, thereby providing an accurate verification basis for subsequent data verification.

303: The computing device stores the first data and the verification information of the first data.

**In** this embodiment of this application, the computing device stores the first data in a corresponding data row in the first data table, and stores the verification information of the first data in a target column in the data row. The target column is a new structure added to an original data structure. For example, the target column is the last column in the data table. In some embodiments, when storing the first data, the computing device further stores corresponding system information. The system information includes file offset information, transaction information, and the like corresponding to the first data.

**In** addition, FIG. 3 further includes a figure (b). The figure (b) in FIG. 3 is a schematic diagram of a data storage structure according to this embodiment of this application. Refer to FIG. 3(b). The verification information of the first data is stored in the last column (that is, the target column) of the row corresponding to the first data in the data table. This may be considered as storing the verification information at the end of the first data. The data row corresponding to the first data stores the user data and the verification information of the first data.

**In** some embodiments, the computing device writes data to which verification information is attached to a corresponding storage file.

According to the foregoing technical solution, verification information of corresponding data can be obtained when a data insertion operation is performed. The obtained verification information and the data are stored as a whole, and the verification information is added to the data to prevent tampering. Further, the addition of the verification information through the data insertion operation is documented by using a verification set. In this way, an accurate verification basis for subsequent data verification can be provided, to implement data tracing.

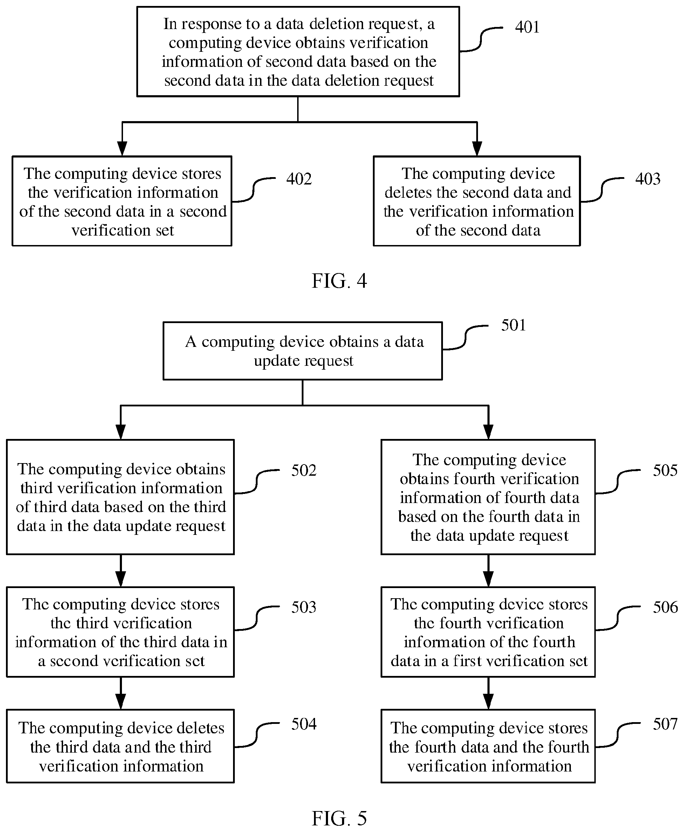

FIG. 4 is a schematic flowchart of a data verification method according to an embodiment of this application. Refer to FIG. 4. When a data change request is a data deletion request, a procedure in which a computing device stores data includes the following step 401 to step 403.

401: In response to the data deletion request, the computing device obtains verification information of second data based on the second data in the data deletion request.

The data deletion request indicates to delete the second data from a second data table. The second data may be one or more columns in a data row, or may be understood as one or more fields in one piece of data. For example, in an electronic financial trade scenario, a terminal executes a transaction of deleting trade history, carries trade data related to the deletion of the trade history in the data deletion request, and sends the data deletion request to a data storage system, to request the data storage system to delete the corresponding trade history from a corresponding data table.

In this embodiment of this application, the data row including the second data includes the second data (for example, user data), system information, and the verification information of the second data. For example, in the electronic financial trade scenario, if a user initiates a request for deleting trade history, the user data includes financial account information (including an account number, an account balance, and the like) of the user, information about the trade history, information that the user requests to delete, and the like.

For the verification information of the second data, refer to step 401. Details are not described herein again.

402: The computing device stores the verification information of the second data in a second verification set, where the second verification set is used to store verification information of data corresponding to a request type that is a data deletion request.

The second verification set is used to document a data deletion operation that occurs in the data storage system. When data needs to be deleted from a storage space, the computing device synchronously stores, in the second verification set, verification information corresponding to the data, to document a change of the data by storing the verification information, thereby providing an accurate verification basis for subsequent data verification.

403: The computing device deletes the second data and the verification information of the second data.

In this embodiment of this application, the computing device deletes the second data and the verification information of the second data from the data row including the second data.

According to the foregoing technical solution, the computing device can obtain verification information of corresponding data when performing a data deletion operation. Deletion of the verification information through the data deletion operation is documented by storing the verification information in a verification set. In this way, an accurate verification basis for subsequent data verification can be provided, to implement data tracing.

FIG. 5 is a schematic flowchart of a data verification method according to an embodiment of this application. Refer to FIG. 5. When a data change request is a data update request, a procedure in which a computing device stores data includes the following step 501 to step 507.

501: The computing device obtains the data update request. Step 502 and step 505 are then performed.

The data update request means that a user requests to update third data that is stored in a third data table. For example, in an electronic financial trade scenario, a terminal executes a withdrawal trade transaction for a user, carries trade data of the withdrawal trade transaction in the data update request, and sends the data update request to a data storage system, to request the data storage system to update data in a data table that stores an account balance.

In this embodiment of this application, in response to the data update request, the computing device needs to delete the stored third data, and then insert fourth data, to implement a data update.

502: The computing device obtains third verification information of the third data based on the third data in the data update request.

In this embodiment of this application, as the third data is stored data, the computing device deletes the third data from the third data table in response to the data update request. For example, in an electronic financial trade scenario, if a terminal executes a withdrawal trade transaction for a user, the third data includes information, for example, a financial account number and an account balance that correspond to the trade.

For the third verification information, refer to step 401. Details are not described herein again.

503: The computing device stores the third verification information of the third data in a second verification set, where the second verification set is used to store verification information of data corresponding to a request type that is a data deletion request.

In this embodiment of this application, the second verification set is used to store history of performing a data deletion operation in the data storage system. When the computing device needs to delete data from the data storage system, the computing device synchronously stores, in the second verification set, verification information corresponding to the data, to document a change of the data by storing the verification information, thereby providing an accurate verification basis for subsequent data verification.

504: The computing device deletes the third data and the third verification information.

For step 504, refer to step 403. Details are not described herein again.

505: The computing device obtains fourth verification information of the fourth data based on the fourth data in the data update request.

506: The computing device stores the fourth verification information of the fourth data in a first verification set, where the first verification set is used to store verification information of data corresponding to a request type that is a data insertion request.

507: The computing device stores the fourth data and the fourth verification information.

For steps 505 to 507, refer to the foregoing steps 301 to 303. Details are not described herein again.

According to the foregoing technical solution, when a data update operation is performed, verification information, of data, that needs to be deleted and that needs to be inserted can be obtained, the obtained verification information is separately stored in corresponding verification sets, and a change of the verification information because of a data insertion operation and a data deletion operation is documented at the same time. In this way, with ensured data security, the data storage system can provide, by using a verification set, an accurate verification basis for subsequent data verification, to implement data tracing.

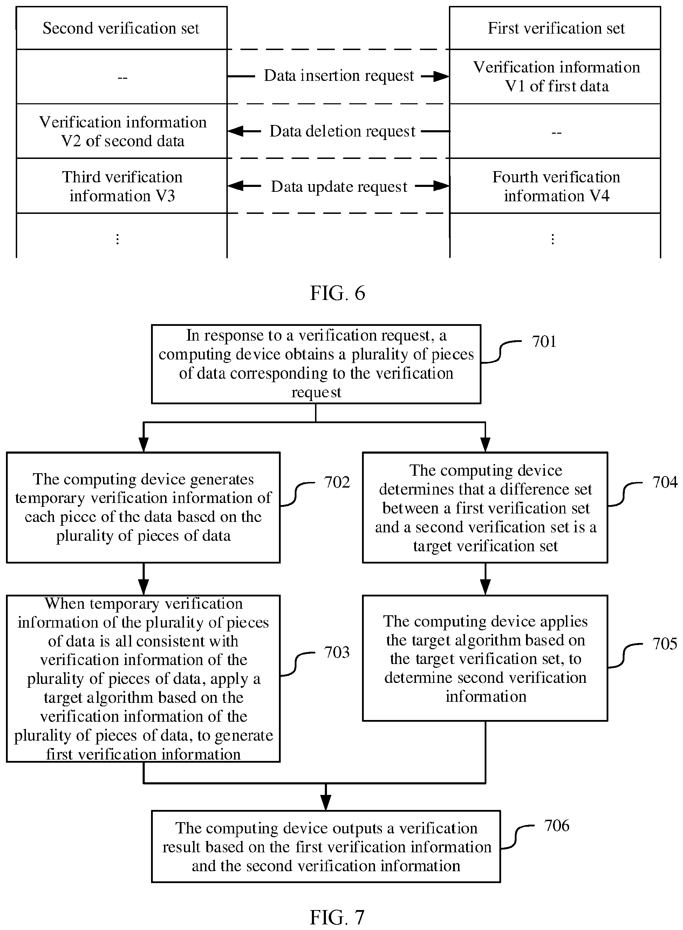

For ease of understanding an operation performed on a verification set in the foregoing procedure, for example, an embodiment of this application provides a schematic diagram of a verification set. Refer to FIG. 6. Corresponding to the embodiments corresponding to FIG. 3 to FIG. 5, the computing device stores verification information V1 of the first data in the first verification set based on the data insertion request, to document insertion of the first data by the computing device; the computing device, stores verification information V2 of the second data in the second verification set based on the data deletion request, to document deletion of the second data by the computing device; and when storing verification information V3 of the third data in the second verification set based on the data update request, the computing device stores verification information V4 of the fourth data in the first verification set, to document a data update completed by the computing device by deleting the third data and then inserting the fourth data.

For any one of the foregoing data change operations, the computing device can verify data in response to a verification request, after performing a corresponding operation, by comparing to determine whether verification information of the data is consistent with verification information in a verification set, to ensure security of performing the data change operation.

In the foregoing technical solution, a procedure of implementing data storage in the data verification method provided in embodiments of this application is described in detail. A data verification procedure in the data verification method provided in embodiments of this application is described below in detail. FIG. 7 is a schematic flowchart of a data verification method according to an embodiment of this application. Refer to FIG. 7. A data verification procedure includes the following steps.

701: In response to a verification request, the computing device obtains a plurality of pieces of data corresponding to the verification request. Step 702 and step 704 are then performed.

The verification request is used to verify whether the plurality of pieces of data have changed, that is, whether the plurality of pieces of data have been tampered with. In some embodiments, the verification request corresponds to a target data table. That is, the verification request is used to verify a plurality of pieces of data stored in the target data table. Correspondingly, the computing device reads the plurality of pieces of data in the target data table in response to the verification request. A quantity of target data tables is not limited in this embodiment of this application, and a quantity of pieces of data that can be included in the target data table is not limited.

In some embodiments, a terminal sends the verification request by invoking a verification interface. After receiving the verification request through the verification interface, the computing device reads, from a memory, a storage file corresponding to data and a storage file corresponding to a verification set, and converts data in the files into a data format that can be processed.

702: The computing device generates temporary verification information of each piece of the data based on the plurality of pieces of data.

The temporary verification information of one piece of data is used to be compared with verification information of the piece of data, to determine whether the piece of data has changed.

In this embodiment of this application, the computing device separately hashes each piece of the data, to generate digest, that is, the temporary verification information, of each piece of the data.

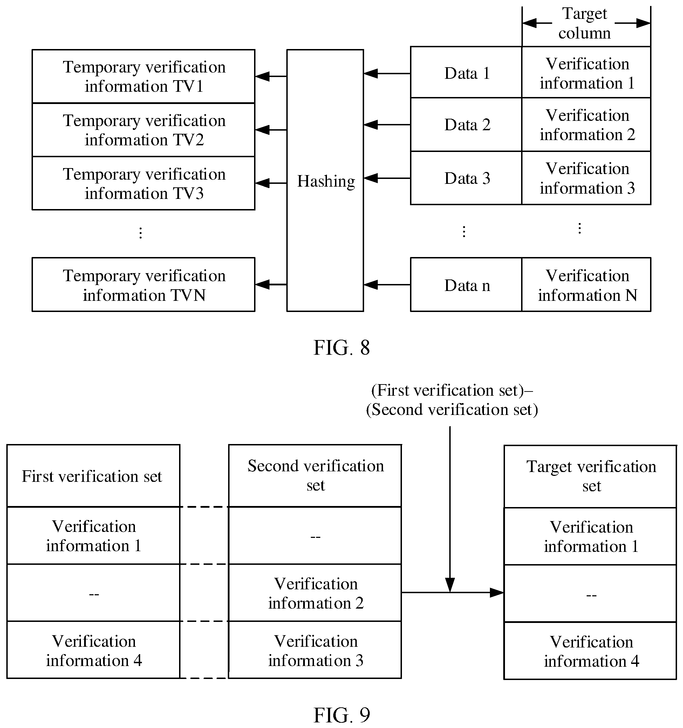

For ease of understanding, an embodiment of this application provides a schematic diagram of the temporary verification information. Refer to FIG. 8. For N pieces of data, the computing device reads data 1, and generates temporary verification information TV1 by hashing; the computing device reads data 2, and generates temporary verification information TV2 by hashing; and so on. N pieces of temporary verification information are generated. Based on this, the generated N pieces of temporary verification information are separately compared with verification information stored in a row including the corresponding data. For example, the temporary verification information TV2 is compared with verification information 2 stored in a row including the data 2, and so on. When the temporary verification information is inconsistent with the corresponding verification information, it indicates that the piece of data has been tampered with. N is a positive integer.

In some embodiments, after the storage file in the memory is processed, the data changes from a whole file to a logical data set in an internal storage. The computing device verifies each piece of data in the data set according to step 702.

Each piece of the data is verified separately before overall verification is performed, so that whether a piece of the data has changed can be determined, to perform preliminary verification. If the preliminary verification fails, a subsequent verification procedure may not be performed. In this way, not only a purpose of verification is achieved, and complexity of data processing can be reduced.

703: When temporary verification information of the plurality of pieces of data is all consistent with verification information of the plurality of pieces of data, a target algorithm is applied based on the verification information of the plurality of pieces of data, to generate first verification information, where the first verification information indicates global verification information of the plurality of pieces of data, and an output result of the target algorithm is not affected by a sequence of computing input data. Step 706 is then performed.

In this embodiment of this application, the target algorithm is any data processing method in which an output result is not affected by the sequence of computing the input data. For example, the target algorithm is any one of the following: (1) adding the verification information of the plurality of pieces of data to obtain a sum of a length n, performing a modulo (mod) operation on 2n based on the sum, and determining that a result of the operation is the first verification information; (2) the target algorithm is to perform an XOR operation on each pair of pieces of verification information of the plurality of pieces of data and determine that a result of the XOR operation is the first verification information; (3) the target algorithm is to multiply the verification information of the plurality of pieces of data to obtain a product of a length n, perform a modulo (mod) operation on 2n based on the product, and determine that a result of the operation is the first verification information; (4) sorting and concatenating the verification information of the plurality of pieces of data into concatenated verification information, hashing the concatenated verification information, and determining that a result of hashing is the first verification information; or (5) hashing the verification information of the plurality of pieces of data in a sequence of storing the plurality of pieces of data in a self-balancing binary search tree, and determining that a result of hashing is the first verification information. n is a positive integer.

It should be noted that when temporary verification information of any piece of the data is inconsistent with verification information of corresponding data, that is, there is tampered data in the N pieces of data, a result of verification of the computing device on the N pieces of data is that the verification fails.

The target algorithm removes a limitation of a sequence of data change operations on data verification. That is, regardless of a sequence in which data operations are performed, according to the target algorithm, as long as a status of data remains the same, verification can success. In this way, with ensured data security and accuracy, the data storage system can support a plurality of types of data operations, thereby greatly improving system performance and enhancing a degree of parallel data processing.

704: The computing device determines that a difference set between a first verification set and a second verification set is a target verification set, where the first verification set includes verification information of data corresponding to a historical insertion operation, and the second verification set includes verification information of data corresponding to a historical deletion operation.

A difference between the first verification set and the second verification set is calculated to obtain verification information that exists in the first verification set but does not exist in the second verification set. The verification information indicates data that has been inserted but has not deleted, that is, remaining data in the data table after a series of data insertion, data deletion, and data update operations. The target verification set is a set of verification information corresponding to the remaining data.

To better describe a procedure of determining the target verification set, an embodiment of this application provides a schematic diagram of a target verification set. Refer to FIG. 9. Verification information 1 is stored in the first verification set based on a data insertion operation; verification information 2 is stored in the second verification set based on a data deletion operation; and based on a data update operation, verification information 4 is stored in the first verification set and verification information 3 is stored in the second verification set. In this case, the target verification set obtained after the difference is calculated should include the verification information 1 and the verification information 4. That is, if the data in the data table is not tampered with, data corresponding to the verification information 1 and data corresponding to the verification information 4 should be stored in the data table.

705: The computing device applies the target algorithm based on the target verification set, to determine second verification information, where the second verification information indicates global verification information of the target verification set.

The computing device represents the target verification set in a simple data form according to the target algorithm, to facilitate a subsequent comparison procedure. The target algorithm in this step is the target algorithm in step 703. Therefore, for a procedure of determining the second verification information in this step, refer to step 703. Details are not described herein again.

Correspondingly, according to the target algorithm, a sequence of storing verification information in the target verification set does not affect final determining of the second verification information, and therefore does not affect a data verification procedure. In addition, because the sequence of storing corresponds to a sequence in which historical data change operations have occurred, data verification is not limited to the sequence in which the data change operations have occurred, and data verification can be performed accurately for concurrent data change operations, so that a degree of parallel data processing is enhanced.

Further, in the foregoing procedure of determining the first verification information and the second verification information, a change of data is actually reflected by a change of verification information, so that when the data changes, the change of the data can be logically traced based on the change of the verification information, to implement accurate data verification. Logical data tracing can be implemented by generating only a small amount of verification information, so that data processing efficiency is greatly improved.

706: The computing device outputs a verification result based on the first verification information and the second verification information.

When the first verification information is consistent with the second verification information, it indicates that the N pieces of data are consistent with data corresponding to the verification information in the target verification set. In other words, the N pieces of data have not been tampered with. Therefore, the verification result is that the verification successes. When the first verification information is inconsistent with the second verification information, it indicates that the N pieces of data are inconsistent with the data corresponding to the verification information in the target verification set. In other words, the N pieces of data have been tampered with. Therefore, the verification result is that the verification fails.

In the technical solution provided in this embodiment of this application, during data verification, the first verification information is obtained according to the target algorithm based on the verification information of the data, the second verification information is obtained according to the target algorithm based on the target verification set determined based on the first verification set and the second verification set, and finally the first verification information is compared with the second verification information, to obtain the verification result. As the output result of the target algorithm is not affected by the sequence of computing the input data, a type and a sequence of a data operation do not affect data verification, so that a plurality of types of data operations can be supported, and a degree of parallel data processing can be enhanced while security and accuracy of data verification are ensured, to improve data processing efficiency.

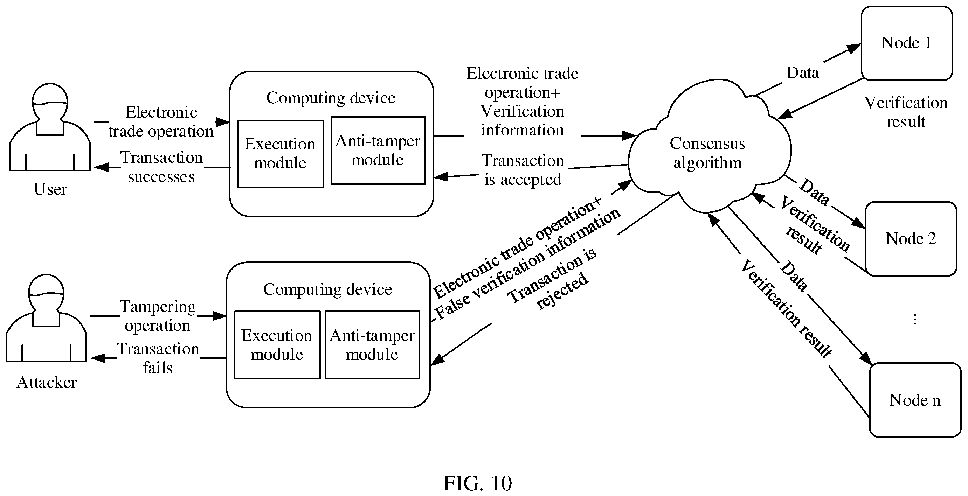

An example in which the data verification method is used in an electronic financial trade process is used below for description. FIG. 10 is a schematic diagram of an application scenario of a data verification method according to an embodiment of this application. Refer to FIG. 10. A computing device in a data storage system includes an execution module and an anti-tamper module. The execution module performs an electronic trade operation based on a trade transaction requested by a user, and the anti-tamper module is configured to generate verification information corresponding to the electronic trade operation, and perform verification based on received data.
1. In an electronic financial trade scenario, the user performs an electronic trade operation, for example, purchases a financial product or withdraws deposit. It should be noted that, such an electronic trade operation causes a change of account balance information and other data.
2. In response to the electronic trade operation, the computing device performs a data deletion operation on original account balance information, and then performs a data insertion operation based on new account balance information, to update the account balance information in a target data table to a latest balance.
3. Based on the data deletion operation and the data insertion operation, the computing device stores, in a second verification set, verification information corresponding to the data deletion operation, and stores, in a first verification set, verification information corresponding to the data insertion operation.
4. The computing device sends the electronic trade operation of the user and the verification information corresponding to the data insertion operation to other nodes (for example, a node 1 and a node 2 in FIG. 10) in the data storage system for a consensus, where the computing device and the other nodes reach a consensus according to a consensus algorithm.
5. After receiving the electronic trade operation and the verification information corresponding to the data insertion operation, the other nodes in the data storage system perform local verification, and send information showing "Transaction accepted" to the other nodes after the verification successes. A process of the local verification means performing an electronic trade operation on a local computing device, and comparing an execution result with received verification information. If a comparison result indicates consistency, the verification successes; or if a comparison result indicates inconsistency, the verification fails.
6. After receiving the result showing "Transaction accepted" from the other nodes, the computing device stores corresponding trade data locally, and returns "Transaction successes" to the user.

For the computing device in the data storage system, the anti-tamper module is used to perform the foregoing procedure of generating the verification information and performing verification based on the received data, thereby preventing some malicious attackers from tampering with the data in a special way. Once the computing device receives a result showing a transaction is rejected, the computing device finds out that data has been tampered with, and returns "Transaction fails" to an O&M engineer. Finally, a malicious operation that bypasses the anti-tamper module cannot be implemented on another computing device, and the another computing device finds out that the data has been tampered with.

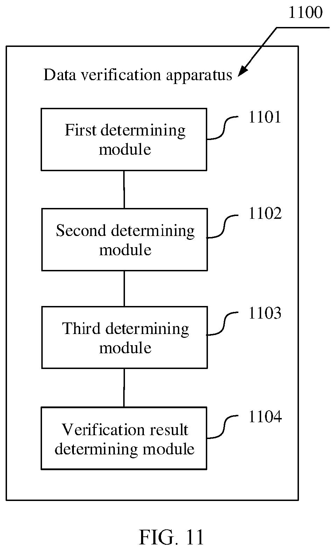

FIG. 11 is a schematic diagram of a structure of a data verification apparatus according to an embodiment of this application. As shown in FIG. 11, a data verification apparatus 1100 includes a first determining module 1101, a second determining module 1102, a third determining module 1103, and a verification result determining module 1104.

The first determining module 1101 is configured to: in response to a verification request, apply a target algorithm based on a plurality of pieces of data corresponding to the verification request, to determine first verification information, where the first verification information indicates global verification information of the plurality of pieces of data, and an output result of the target algorithm is not affected by a sequence of computing input data.

The second determining module 1102 is configured to determine a target verification set based on a first verification set and a second verification set, where the first verification set includes verification information of data corresponding to a historical insertion operation, and the second verification set includes verification information of data corresponding to a historical deletion operation.

The third determining module 1103 is configured to apply the target algorithm based on the target verification set, to determine second verification information, where the second verification information indicates global verification information of the target verification set.

The verification result determining module 1104 is configured to output a verification result based on the first verification information and the second verification information.

In some embodiments, the first determining module 1101 includes:
a temporary verification unit, configured to generate temporary verification information of each piece of the data based on the plurality of pieces of data; and
a first determining unit, configured to: when temporary verification information of the plurality of pieces of data is all consistent with verification information of the plurality of pieces of data, apply the target algorithm based on the verification information of the plurality of pieces of data, to generate the first verification information, where the output result of the target algorithm is not affected by the sequence of computing the input data.

In some embodiments, the target algorithm includes:
adding a plurality of pieces of verification information to obtain a sum of a length n, and performing a modulo operation on 2n based on the sum;
performing an XOR operation on each pair of pieces of verification information in the plurality of pieces of verification information;
multiplying the plurality of pieces of verification information to obtain a product of a length n, and performing a modulo operation on 2n based on the product;
sorting and concatenating the plurality of pieces of verification information into concatenated verification information, and hashing the concatenated verification information; or
hashing the plurality of pieces of data in a sequence of storing the plurality of pieces of verification information in a self-balancing binary search tree, where
the plurality of pieces of verification information is the verification information of the plurality of pieces of data corresponding to the verification request, or a plurality of pieces of verification information in the target verification set, and n is a positive integer.

In some embodiments, when temporary verification information of any piece of the data is inconsistent with verification information of the data, it is determined that the verification result is that verification fails.

In some embodiments, the second determining module 1102 is configured to:
determine that a difference set between the first verification set and the second verification set is the target verification set.

In some embodiments, when the first verification information is consistent with the second verification information, the verification result is that verification successes; or when the first verification information is inconsistent with the second verification information, the verification result is that verification fails.

In some embodiments, the apparatus 1100 further includes an insertion module, configured to:
in response to a data insertion request, obtain verification information of first data based on the first data in the data insertion request;
store the verification information of the first data in the first verification set, where the first verification set is used to store verification information of data corresponding to a request type that is a data insertion request; and
store the first data and the verification information of the first data.

In some embodiments, the apparatus 1100 further includes a deletion module, configured to:
in response to a data deletion request, obtain verification information of second data based on the second data in the data deletion request;
store the verification information of the second data in the second verification set, where the second verification set is used to store verification information of data corresponding to a request type that is a data deletion request; and
delete the second data and the verification information of the second data.

In some embodiments, the apparatus 1100 further includes an update module, configured to:
obtain a data update request;
obtain third verification information of third data based on the third data in the data update request; store the third verification information of the third data in the second verification set, where the second verification set is used to store verification information of data corresponding to a request type that is a data deletion request; and delete the third data and the third verification information; and
obtain fourth verification information of fourth data based on the fourth data in the data update request; store the fourth verification information of the fourth data in the first verification set, where the first verification set is used to store verification information of data corresponding to a request type that is a data insertion request; and store the fourth data and the fourth verification information.

In the technical solution provided in this embodiment of this application, during data verification, the first verification information is obtained according to the target algorithm based on the verification information of the data, the second verification information is obtained according to the target algorithm based on the target verification set determined based on the first verification set and the second verification set, and finally the first verification information is compared with the second verification information, to obtain the verification result. As the output result of the target algorithm is not affected by the sequence of computing the input data, a type and a sequence of a data operation do not affect data verification, so that a plurality of types of data operations can be supported, and a degree of parallel data processing can be enhanced while security and accuracy of data verification are ensured, to improve data processing efficiency.

It should be noted that when the data verification apparatus 1100 provided in the foregoing embodiment performs data verification, the division into the foregoing functional modules is merely used as an example for description. In actual application, the foregoing functions can be allocated to different functional modules for implementation based on a requirement. In other words, an inner structure of the apparatus is divided into different functional modules to implement all or some of the functions described above. In addition, the data verification apparatus provided in the foregoing embodiments and embodiments of the data verification method pertain to a same concept. For a specific implementation process of the apparatus, refer to the method embodiments. Details are not described herein again.

In this application, the terms "first", "second", and the like are used to distinguish same or similar items whose effect and functions are basically the same. It should be understood that there is no logical or time-sequence dependency among "first", "second", and "n^{th}", and a quantity and an execution sequence are not limited. It should also be understood that although the terms such as "first" and "second" are used in the following descriptions to describe various elements, these elements should not be limited by the terms. These terms are merely used to distinguish one element from another element. For example, without departing from the scope of the examples, a first verification set may be referred to as a second verification set, and similarly, a second verification set may be referred to as a first verification set.

The term "at least one" in this application means one or more, and the term "plurality of" in this application means two or more. For example, a plurality of pieces of data means two or more pieces of data.

The foregoing descriptions are merely specific implementations of this application, but are not intended to limit the protection scope of this application. Various equivalent modifications or replacements readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used for implementation, all or some of embodiments may be implemented in a form of a computer program product. The computer program product includes one or more computer program instructions. When the computer program instruction is loaded and executed on a computing device, all or some of the procedures or functions according to embodiments of this application are generated.

A person of ordinary skill in the art may understand that all or some of the steps in the foregoing embodiments may be implemented by hardware or a program instructing related hardware. The program may be stored in a computer-readable storage medium. The storage medium may be a read-only memory, a magnetic disk, an optical disc, or the like.

In conclusion, the embodiments described above are merely intended for describing the technical solutions of this application, not for limiting this application. Although this application is described in detail with reference to the foregoing embodiments, a person of ordinary skill in the art should understand that modifications can still be made to the technical solutions described in the foregoing embodiments or equivalent replacements can still be made to some technical features thereof, without departing from the scope of the technical solutions of embodiments of this application.

## Claims

1. A data verification method, wherein the method comprises:
in response to a verification request, obtaining (701) by a computing device, a plurality of pieces of data corresponding to the verification request;
generating (702), by the computing device, temporary verification information of each piece of the data based on the plurality of pieces of data;
when temporary verification information of the plurality of pieces of data is all consistent with verification information of the plurality of pieces of data, applying (703) a target algorithm based on the verification information of the plurality of pieces of data, to generate first verification information, where the first verification information indicates global verification information of the plurality of pieces of data, and an output result of the target algorithm is not affected by a sequence of the plurality of pieces of data;
determining (704), by the computing device, that a difference set between a first verification set and a second verification set is a target verification set, where the first verification set comprises verification information of data corresponding to a historical insertion operation, and the second verification set comprises verification information of data corresponding to a historical deletion operation;
applying (705), by the computing device, the target algorithm based on the target verification set, to determine second verification information, where the second verification information indicates global verification information of the target verification set, and an output result of the target algorithm is not affected by a sequence of computing input data; and
outputting (706), by the computing device, a verification result based on the first verification information and the second verification information, wherein
when the first verification information is consistent with the second verification information, the verification result is that verification successes; or
when the first verification information is inconsistent with the second verification information, the verification result is that verification fails.

2. The method according to claim 1, wherein the target algorithm is any data processing method in which an output result is not affected by the sequence of the plurality of pieces of data, and wherein the target algorithm comprises:
adding a plurality of pieces of verification information to obtain a sum of a length n, and performing a modulo operation on 2n based on the sum, and determining that a result of the operation is the first verification information;
performing an XOR operation on each pair of pieces of verification information in the plurality of pieces of data and determine that a result of the XOR operation is the first verification information;
multiplying the verification information of the plurality of pieces of data to obtain a product of a length n, and performing a modulo operation on 2n based on the product, and determining that a result of the operation is the first verification information;
sorting and concatenating the verification information of the plurality of pieces of data into concatenated verification information, and hashing the concatenated verification information, and determining that a result of hashing is the first verification information; or
hashing the verification information of the plurality of pieces of data in a sequence of storing the plurality of pieces of data in a self-balancing binary search tree, and determining that a result of hashing is the first verification information; wherein
n is a positive integer.

3. The method according to claim 1, wherein the method further comprises:
in response to a data insertion request, obtaining verification information of first data based on the first data in the data insertion request;
storing the verification information of the first data in the first verification set, wherein the first verification set is used to store verification information of data corresponding to a request type that is a data insertion request; and
storing the first data and the verification information of the first data.

4. The method according to claim 1, wherein the method further comprises:
in response to a data deletion request, obtaining verification information of second data based on the second data in the data deletion request;
storing the verification information of the second data in the second verification set, wherein the second verification set is used to store verification information of data corresponding to a request type that is a data deletion request; and
deleting the second data and the verification information of the second data.

5. The method according to claim 1, wherein the method further comprises:
obtaining a data update request;
obtaining third verification information of third data based on the third data in the data update request; storing the third verification information of the third data in the second verification set, wherein the second verification set is used to store verification information of data corresponding to a request type that is a data deletion request; and deleting the third data and the third verification information; and
obtaining fourth verification information of fourth data based on the fourth data in the data update request; storing the fourth verification information of the fourth data in the first verification set, wherein the first verification set is used to store verification information of data corresponding to a request type that is a data insertion request; and storing the fourth data and the fourth verification information.

6. A data verification apparatus, wherein the apparatus is configured to obtain in response to a verification request a plurality of pieces of data corresponding to the verification request, and wherein the apparatus comprises:
a temporary verification unit of a first determining module (1101), configured to generate temporary verification information of each piece of the data based on the plurality of pieces of data;
a first determining unit of the first determining module configured to when temporary verification information of the plurality of pieces of data is all consistent with verification information of the plurality of pieces of data, apply a target algorithm based on the verification information of the plurality of pieces of data, to generate first verification information, where the first verification information indicates global verification information of the plurality of pieces of data, and an output result of the target algorithm is not affected by a sequence of the plurality of pieces of data;
a second determining module (1102) configured to determine that a difference set between a first verification set and a second verification set is a target verification set, where the first verification set comprises verification information of data corresponding to a historical insertion operation, and the second verification set comprises verification information of data corresponding to a historical deletion operation;
a third determining module (1103) configured to apply the target algorithm based on the target verification set, to determine second verification information, where the second verification information indicates global verification information of the target verification set;
a verification result determining module (1104) configured to output a verification result based on the first verification information and the second verification information, wherein
when the first verification information is consistent with the second verification information, the verification result is that verification successes; or
when the first verification information is inconsistent with the second verification information, the verification result is that verification fails.

7. The apparatus according to claim 6, wherein the target algorithm is any data processing method in which an output result is not affected by the sequence of the plurality of pieces of data, and
wherein the target algorithm comprises:
adding a plurality of pieces of verification information to obtain a sum of a length n, and performing a modulo operation on 2n based on the sum, and determining that a result of the operation is the first verification information;
performing an XOR operation on each pair of pieces of verification information in the plurality of pieces of data and determine that a result of the XOR operation is the first verification information;
multiplying the verification information of the plurality of pieces of data to obtain a product of a length n, and performing a modulo operation on 2n based on the product, and determining that a result of the operation is the first verification information;
sorting and concatenating the verification information of the plurality of pieces of data into concatenated verification information, and hashing the concatenated verification information, and determining that a result of hashing is the first verification information; or
hashing the verification information of the plurality of pieces of data in a sequence of storing the plurality of pieces of data in a self-balancing binary search tree, and determining that a result of hashing is the first verification information; wherein
n is a positive integer.

8. A computer-readable storage medium, wherein the computer-readable storage medium is configured to store at least one piece of program code, and the at least one piece of program code is used to perform the data verification method according to any one of claims 1 to 5.

## Patentansprüche

1. Datenverifizierungsverfahren, wobei das Verfahren Folgendes umfasst:
als Reaktion auf eine Verifizierungsanforderung, Erlangen (701) einer Vielzahl von Datenteilen, die der Verifizierungsanforderung entspricht, durch eine Rechenvorrichtung;
Erzeugen (702) von temporären Verifizierungsinformationen für jeden Teil der Daten basierend auf der Vielzahl von Datenteilen durch die Rechenvorrichtung;
wenn die temporären Verifizierungsinformationen der Vielzahl von Datenteilen alle mit den Verifizierungsinformationen der Vielzahl von Datenteilen übereinstimmen, Anwenden (703) eines Zielalgorithmus basierend auf den Verifizierungsinformationen der Vielzahl von Datenteilen, um erste Verifizierungsinformationen zu erzeugen, wobei die ersten Verifizierungsinformationen globale Verifizierungsinformationen der Vielzahl von Datenteilen angeben und ein Ausgabeergebnis des Zielalgorithmus nicht durch eine Sequenz der Vielzahl von Datenteilen beeinflusst wird;
Bestimmen (704), dass ein Differenzsatz zwischen einem ersten Verifizierungssatz und einem zweiten Verifizierungssatz ein Zielverifizierungssatz ist, durch die Rechenvorrichtung, wobei der erste Verifizierungssatz Verifizierungsinformationen von Daten umfasst, die einem historischen Einfügevorgang entsprechen, und der zweite Verifizierungssatz Verifizierungsinformationen von Daten umfasst, die einem historischen Löschvorgang entsprechen;
Anwenden (705) des Zielalgorithmus basierend auf dem Zielverifizierungssatz durch die Rechenvorrichtung, um zweite Verifizierungsinformationen zu bestimmen, wobei die zweiten Verifizierungsinformationen globale Verifizierungsinformationen des Zielverifizierungssatzes angeben und ein Ausgabeergebnis des Zielalgorithmus nicht durch eine Sequenz von Recheneingabedaten beeinflusst wird; und
Ausgeben (706) eines Verifizierungsergebnisses basierend auf den ersten Verifizierungsinformationen und den zweiten Verifizierungsinformationen durch die Rechenvorrichtung, wobei wenn die ersten Verifizierungsinformationen mit den zweiten Verifizierungsinformationen übereinstimmen, das Verifizierungsergebnis ist, dass die Verifizierung erfolgreich ist; oder
wenn die ersten Verifikationsinformationen nicht mit den zweiten Verifikationsinformationen übereinstimmen, das Verifizierungsergebnis ist, dass die Verifizierung fehlschlägt.

2. Verfahren gemäß Anspruch 1, wobei es sich bei dem Zielalgorithmus um ein beliebiges Datenverarbeitungsverfahren handelt, bei dem ein Ausgabeergebnis nicht durch die Sequenz der Vielzahl von Datenteilen beeinflusst wird, und
wobei der Zielalgorithmus Folgendes umfasst:
Addieren einer Vielzahl von Teilen von Verifizierungsinformationen, um eine Summe der Länge n zu erlangen, und Durchführen eines Modulo-Vorgangs an 2n basierend auf der Summe und Bestimmen, dass ein Ergebnis des Vorgangs die ersten Verifizierungsinformationen sind;
Durchführen eines XOR-Vorgangs an jedem Paar von Teilen von Verifizierungsinformationen in der Vielzahl von Datenteilen und Bestimmen, dass ein Ergebnis des XOR-Vorgangs die ersten Verifizierungsinformationen sind;
Multiplizieren der Verifizierungsinformationen der Vielzahl von Datenteilen, um ein Produkt der Länge n zu erlangen, und Durchführen eines Modulo-Vorgangs an 2n basierend auf dem Produkt und Bestimmen, dass ein Ergebnis des Vorgangs die ersten Verifizierungsinformationen sind;
Sortieren und Verketten der Verifizierungsinformationen der Vielzahl von Datenteilen zu verketteten Verifizierungsinformationen und Hashing der verketteten Verifizierungsinformationen und Bestimmen, dass ein Ergebnis des Hashings die ersten Verifizierungsinformationen sind; oder
Hashing der Verifizierungsinformationen der Vielzahl von Datenteilen in einer Sequenz des Speicherns der Vielzahl von Datenteilen in einem selbstabgleichenden binären Suchbaum und Bestimmen, dass ein Ergebnis des Hashings die ersten Verifizierungsinformationen sind; wobei
n eine positive ganze Zahl ist.

3. Verfahren gemäß Anspruch 1, wobei das Verfahren ferner Folgendes umfasst:
als Reaktion auf eine Dateneinfügeanforderung, Erlangen von Verifizierungsinformationen erster Daten basierend auf den ersten Daten in der Dateneinfügeanforderung;
Speichern der Verifizierungsinformationen der ersten Daten in dem ersten Verifizierungssatz, wobei der erste Verifizierungssatz verwendet wird, um Verifizierungsinformationen von Daten zu speichern, die einem Anforderungstyp entsprechen, der eine Dateneinfügeanforderung ist; und
Speichern der ersten Daten und der Verifizierungsinformationen der ersten Daten.

4. Verfahren gemäß Anspruch 1, wobei das Verfahren ferner Folgendes umfasst:
als Reaktion auf eine Datenlöschungsanforderung, Erlangen von Verifizierungsinformationen von zweiten Daten basierend auf den zweiten Daten in der Datenlöschungsanforderung;
Speichern der Verifizierungsinformationen der zweiten Daten in dem zweiten Verifizierungssatz, wobei der zweite Verifizierungssatz verwendet wird, um Verifizierungsinformationen von Daten zu speichern, die einem Anforderungstyp entsprechen, der eine Datenlöschungsanforderung ist; und
Löschen der zweiten Daten und der Verifizierungsinformationen der zweiten Daten.

5. Verfahren gemäß Anspruch 1, wobei das Verfahren ferner Folgendes umfasst:
Erlangen einer Datenaktualisierungsanforderung;
Erlangen von dritten Verifizierungsinformationen von dritten Daten basierend auf den dritten Daten in der Datenaktualisierungsanforderung; Speichern der dritten Verifizierungsinformationen der dritten Daten in dem zweiten Verifizierungssatz, wobei der zweite Verifizierungssatz verwendet wird, um Verifizierungsinformationen von Daten zu speichern, die einem Anforderungstyp entsprechen, der eine Datenlöschungsanforderung ist; und Löschen der dritten Daten und der dritten Verifizierungsinformationen; und
Erlangen von vierten Verifizierungsinformationen von vierten Daten basierend auf den vierten Daten in der Datenaktualisierungsanforderung; Speichern der vierten Verifizierungsinformationen der vierten Daten in dem ersten Verifizierungssatz, wobei der erste Verifizierungssatz verwendet wird, um Verifizierungsinformationen von Daten zu speichern, die einem Anforderungstyp entsprechen, der eine Dateneinfügeanforderung ist; und Speichern der vierten Daten und der vierten Verifizierungsinformationen.

6. Datenverifizierungsgerät, wobei das Gerät dazu konfiguriert ist, als Reaktion auf eine Verifizierungsanforderung eine Vielzahl von Datenteilen zu erlangen, die der Verifizierungsanforderung entsprechen, und wobei das Gerät Folgendes umfasst:
eine temporäre Verifizierungseinheit eines ersten Bestimmungsmoduls (1101), die dazu konfiguriert ist, basierend auf der Vielzahl von Datenteilen temporäre Verifizierungsinformationen für jedes Datenteil zu erzeugen;
eine erste Bestimmungseinheit des ersten Bestimmungsmoduls, die dazu konfiguriert ist, wenn die temporären Verifizierungsinformationen der Vielzahl von Datenteilen alle mit den Verifizierungsinformationen der Vielzahl von Datenteilen übereinstimmen, einen Zielalgorithmus basierend auf den Verifizierungsinformationen der Vielzahl von Datenteilen anzuwenden, um erste Verifizierungsinformationen zu erzeugen, wobei die ersten Verifizierungsinformationen globale Verifizierungsinformationen der Vielzahl von Datenteilen angeben und ein Ausgabeergebnis des Zielalgorithmus nicht durch eine Sequenz der Vielzahl von Datenteilen beeinflusst wird;
ein zweites Bestimmungsmodul (1102), das dazu konfiguriert ist, zu bestimmen, dass ein Differenzsatz zwischen einem ersten Verifizierungssatz und einem zweiten Verifizierungssatz ein Zielverifizierungssatz ist, wobei der erste Verifizierungssatz Verifizierungsinformationen von Daten umfasst, die einem historischen Einfügevorgang entsprechen, und der zweite Verifizierungssatz Verifizierungsinformationen von Daten umfasst, die einem historischen Löschvorgang entsprechen;
ein drittes Bestimmungsmodul (1103), das dazu konfiguriert ist, den Zielalgorithmus basierend auf dem Zielverifizierungssatz anzuwenden, um zweite Verifizierungsinformationen zu bestimmen, wobei die zweiten Verifizierungsinformationen globale Verifizierungsinformationen des Zielverifizierungssatzes angeben;
ein Verifizierungsergebnis-Bestimmungsmodul (1104), das dazu konfiguriert ist, ein Verifizierungsergebnis basierend auf den ersten Verifizierungsinformationen und den zweiten Verifizierungsinformationen auszugeben, wobei
wenn die ersten Verifizierungsinformationen mit den zweiten Verifizierungsinformationen übereinstimmen, das Verifizierungsergebnis ist, dass die Verifizierung erfolgreich ist; oder
wenn die ersten Verifikationsinformationen nicht mit den zweiten Verifikationsinformationen übereinstimmen, das Verifizierungsergebnis ist, dass die Verifizierung fehlschlägt.

7. Gerät gemäß Anspruch 6, wobei es sich bei dem Zielalgorithmus um ein beliebiges Datenverarbeitungsverfahren handelt, bei dem ein Ausgabeergebnis nicht durch die Sequenz der Vielzahl von Datenteilen beeinflusst wird, und
wobei der Zielalgorithmus Folgendes umfasst:
Addieren einer Vielzahl von Teilen von Verifizierungsinformationen, um eine Summe der Länge n zu erlangen, und Durchführen eines Modulo-Vorgangs an 2n basierend auf der Summe und Bestimmen, dass ein Ergebnis des Vorgangs die ersten Verifizierungsinformationen sind;
Durchführen eines XOR-Vorgangs an jedem Paar von Teilen von Verifizierungsinformationen in der Vielzahl von Datenteilen und Bestimmen, dass ein Ergebnis des XOR-Vorgangs die ersten Verifizierungsinformationen sind;
Multiplizieren der Verifizierungsinformationen der Vielzahl von Datenteilen, um ein Produkt der Länge n zu erlangen, und Durchführen eines Modulo-Vorgangs an 2n basierend auf dem Produkt und Bestimmen, dass ein Ergebnis des Vorgangs die ersten Verifizierungsinformationen sind;
Sortieren und Verketten der Verifizierungsinformationen der Vielzahl von Datenteilen zu verketteten Verifizierungsinformationen und Hashing der verketteten Verifizierungsinformationen und Bestimmen, dass ein Ergebnis des Hashings die ersten Verifizierungsinformationen sind; oder
Hashing der Verifizierungsinformationen der Vielzahl von Datenteilen in einer Sequenz des Speicherns der Vielzahl von Datenteilen in einem selbstabgleichenden binären Suchbaum und Bestimmen, dass ein Ergebnis des Hashings die ersten Verifizierungsinformationen sind; wobei
n eine positive ganze Zahl ist.

8. Computerlesbares Speichermedium, wobei das computerlesbare Speichermedium dazu konfiguriert ist, mindestens einen Teil des Programmcodes zu speichern, und der mindestens eine Teil des Programmcodes dazu verwendet wird, das Datenverifizierungsverfahren gemäß einem der Ansprüche 1 bis 5 durchzuführen.

## Revendications

1. Procédé de vérification de données, dans lequel le procédé comprend :
en réponse à une demande de vérification, l'obtention (701) par un dispositif informatique, d'une pluralité d'éléments de données correspondant à la demande de vérification ;
la génération (702), par le dispositif informatique, d'informations de vérification temporaires de chaque élément des données sur la base de la pluralité d'éléments de données ;
lorsque les informations de vérification temporaires de la pluralité d'éléments de données concordent toutes avec les informations de vérification de la pluralité d'éléments de données, l'application (703) d'un algorithme cible sur la base des informations de vérification de la pluralité d'éléments de données, pour générer les premières informations de vérification, où les premières informations de vérification indiquent les informations de vérification globales de la pluralité d'éléments de données, et un résultat de sortie de l'algorithme cible n'est pas affecté par une séquence de la pluralité d'éléments de données ;
la détermination (704), par le dispositif informatique, qu'un ensemble de différences entre un premier ensemble de vérification et un second ensemble de vérification est un ensemble de vérification cible, où le premier ensemble de vérification comprend des informations de vérification de données correspondant à une opération d'insertion historique, et le second ensemble de vérification comprend des informations de vérification de données correspondant à une opération de suppression historique ;
l'application (705), par le dispositif informatique, de l'algorithme cible sur la base de l'ensemble de vérification cible, pour déterminer de deuxièmes informations de vérification, où les deuxièmes informations de vérification indiquent les informations de vérification globales de l'ensemble de vérification cible, et un résultat de sortie de l'algorithme cible n'est pas affecté par une séquence de données d'entrée informatiques ; et
la production (706), par le dispositif informatique, d'un résultat de vérification sur la base des premières informations de vérification et des deuxièmes informations de vérification,
dans lequel
lorsque les premières informations de vérification concordent avec les deuxièmes informations de vérification, le résultat de vérification est que la vérification réussit ; ou
lorsque les premières informations de vérification ne concordent pas avec les deuxièmes informations de vérification, le résultat de vérification est que la vérification échoue.

2. Procédé selon la revendication 1, dans lequel l'algorithme cible est un quelconque procédé de traitement de données dans lequel un résultat de sortie n'est pas affecté par la séquence de la pluralité d'éléments de données, et
dans lequel l'algorithme cible comprend :
l'ajout d'une pluralité d'éléments d'informations de vérification pour obtenir une somme d'une longueur n, et la réalisation d'une opération modulo sur 2n sur la base de la somme, et la détermination qu'un résultat de l'opération est les premières informations de vérification ;
la réalisation d'une opération XOR sur chaque paire d'éléments d'informations de vérification dans la pluralité d'éléments de données et la détermination qu'un résultat de l'opération XOR est les premières informations de vérification ;
la multiplication des informations de vérification de la pluralité d'éléments de données pour obtenir un produit d'une longueur n, et la réalisation d'une opération modulo sur 2n sur la base du produit, et la détermination qu'un résultat de l'opération est les premières informations de vérification ;
le triage et la concaténation des informations de vérification de la pluralité d'éléments de données en informations de vérification concaténées, et le hachage des informations de vérification concaténées, et la détermination qu'un résultat de hachage est les premières informations de vérification ; ou
le hachage des informations de vérification de la pluralité d'éléments de données dans une séquence de stockage de la pluralité d'éléments de données dans un arbre de recherche binaire auto-équilibré, et la détermination qu'un résultat de hachage est les premières informations de vérification ; dans lequel
n est un entier positif.

3. Procédé selon la revendication 1, dans lequel le procédé comprend également :
en réponse à une demande d'insertion de données, l'obtention d'informations de vérification de premières données sur la base des premières données dans la demande d'insertion de données ;
le stockage des informations de vérification des premières données dans le premier ensemble de vérification, dans lequel le premier ensemble de vérification est utilisé pour stocker des informations de vérification de données correspondant à un type de demande qui est une demande d'insertion de données ; et
le stockage des premières données et des informations de vérification des premières données.

4. Procédé selon la revendication 1, dans lequel le procédé comprend également :
en réponse à une demande de suppression de données, l'obtention d'informations de vérification de deuxièmes données sur la base des deuxièmes données dans la demande de suppression de données ;
le stockage des informations de vérification des deuxièmes données dans le second ensemble de vérification, dans lequel le second ensemble de vérification est utilisé pour stocker des informations de vérification de données correspondant à un type de demande qui est une demande de suppression de données ; et
la suppression des deuxièmes données et des informations de vérification des deuxièmes données.

5. Procédé selon la revendication 1, dans lequel le procédé comprend également :
l'obtention d'une demande de mise à jour de données ;
l'obtention de troisièmes informations de vérification de troisièmes données sur la base des troisièmes données dans la demande de mise à jour de données ; le stockage des troisièmes informations de vérification des troisièmes données dans le second ensemble de vérification, dans lequel le second ensemble de vérification est utilisé pour stocker des informations de vérification de données correspondant à un type de demande qui est une demande de suppression de données ; et la suppression des troisièmes données et des troisièmes informations de vérification ; et
l'obtention de quatrièmes informations de vérification de quatrièmes données sur la base des quatrièmes données dans la demande de mise à jour de données ; le stockage des quatrièmes informations de vérification des quatrièmes données dans le premier ensemble de vérification, dans lequel le premier ensemble de vérification est utilisé pour stocker les informations de vérification de données correspondant à un type de demande qui est une demande d'insertion de données ; et le stockage des quatrièmes données et des quatrièmes informations de vérification.

6. Appareil de vérification de données, dans lequel l'appareil est configuré pour obtenir en réponse à une demande de vérification une pluralité d'éléments de données correspondant à la demande de vérification, et dans lequel l'appareil comprend :
une unité de vérification temporaire d'un premier module de détermination (1101), configuré pour générer des informations de vérification temporaires de chaque élément des données sur la base de la pluralité d'éléments de données ;
une première unité de détermination du premier module de détermination configuré pour lorsque les informations de vérification temporaires de la pluralité d'éléments de données concordent toutes avec les informations de vérification de la pluralité d'éléments de données, appliquer un algorithme cible sur la base des informations de vérification de la pluralité d'éléments de données, pour générer les premières informations de vérification, où les premières informations de vérification indiquent les informations de vérification globales de la pluralité d'éléments de données, et un résultat de sortie de l'algorithme cible n'est pas affecté par une séquence de la pluralité d'éléments de données ;
un deuxième module de détermination (1102) configuré pour déterminer qu'un ensemble de différences entre un premier ensemble de vérification et un second ensemble de vérification est un ensemble de vérification cible, où le premier ensemble de vérification comprend des informations de vérification de données correspondant à une opération d'insertion historique, et le second ensemble de vérification comprend des informations de vérification de données correspondant à une opération de suppression historique ;
un troisième module de détermination (1103) configuré pour appliquer l'algorithme cible sur la base de l'ensemble de vérification cible, pour déterminer de deuxièmes informations de vérification, où les deuxièmes informations de vérification indiquent les informations de vérification globales de l'ensemble de vérification cible ;
un module de détermination de résultat de vérification (1104) configuré pour produire un résultat de vérification sur la base des premières informations de vérification et des deuxièmes informations de vérification, dans lequel
lorsque les premières informations de vérification concordent avec les deuxièmes informations de vérification, le résultat de vérification est que la vérification réussit ; ou
lorsque les premières informations de vérification ne concordent pas avec les deuxièmes informations de vérification, le résultat de vérification est que la vérification échoue.

7. Appareil selon la revendication 6, dans lequel l'algorithme cible est un quelconque procédé de traitement de données dans lequel un résultat de sortie n'est pas affecté par la séquence de la pluralité d'éléments de données, et
dans lequel l'algorithme cible comprend :
l'ajout d'une pluralité d'éléments d'informations de vérification pour obtenir une somme d'une longueur n, et la réalisation d'une opération modulo sur 2n sur la base de la somme, et la détermination qu'un résultat de l'opération est les premières informations de vérification ;
la réalisation d'une opération XOR sur chaque paire d'éléments d'informations de vérification dans la pluralité d'éléments de données et la détermination qu'un résultat de l'opération XOR est les premières informations de vérification ;
la multiplication des informations de vérification de la pluralité d'éléments de données pour obtenir un produit d'une longueur n, et la réalisation d'une opération modulo sur 2n sur la base du produit, et la détermination qu'un résultat de l'opération est les premières informations de vérification ;
le triage et la concaténation des informations de vérification de la pluralité d'éléments de données en informations de vérification concaténées, et le hachage des informations de vérification concaténées, et la détermination qu'un résultat de hachage est les premières informations de vérification ; ou
le hachage des informations de vérification de la pluralité d'éléments de données dans une séquence de stockage de la pluralité d'éléments de données dans un arbre de recherche binaire auto-équilibré, et la détermination qu'un résultat de hachage est les premières informations de vérification ; dans lequel
n est un entier positif.

8. Support de stockage lisible par ordinateur, dans lequel le support de stockage lisible par ordinateur est configuré pour stocker au moins un élément de code de programme, et l'au moins un élément de code de programme est utilisé pour réaliser le procédé de vérification de données selon l'une quelconque des revendications 1 à 5.
